# EUROPÄISCHE PATENTSCHRIFT

(11) **EP 1 625 784 B1**
(45) Veröffentlichungstag und Bekanntmachung des Hinweises auf die Patenterteilung: **10.01.2007**
(21) Anmeldenummer: 05015594.4
(22) Anmeldetag: 19.07.2005
(51) Int. Cl.: A01G 3/02, A01G 3/047, B26B 13/26, B26B 17/02

(54) **Handbetätigtes Schneidwerkzeug, insbesondere Heckenschere oder Astschere**
Manual cutting tool, particularly a hedge trimmer or pruning shears
Outil de coupe manuel, en particulier un taille-haie ou sécateur

(30) Priorität: 09.08.2004 DE 102004039624
(43) Veröffentlichungstag der Anmeldung: 15.02.2006
(73) Patentinhaber: GARDENA Manufacturing GmbH, 89079 Ulm (DE)
(72) Erfinder: Reichart, Vincent, 89075 Ulm (DE)
(74) Vertreter: Patentanwälte Ruff, Wilhelm, Beier, Dauster & Partner

(56) Entgegenhaltungen:
- EP-A- 0 824 999
- EP-A- 1 153 713
- WO-A-03/009670
- DE-A1- 4 023 559
- US-B1- 6 681 492

## Beschreibung

Die Erfindung betrifft ein handbetätigtes Schneidwerkzeug, insbesondere eine Heckenschere oder Astschere, mit zwei schwenkbar aneinander gelagerten Hebeln, die jeweils einseitig mit Schneidklingen oder Backen versehen und zur Kraftverstärkung über eine Getriebeanordnung verbunden sind, die aus mindestens zwei miteinander in Eingriff kommenden Zahnsegmenten besteht, von denen jedes einem der Hebel zugeordnet ist.

Es ist für Heckenscheren oder Astscheren bekannt, zur Erhöhung der Schneidkraft ineinandergreifende Zahngetriebe vorzusehen. Aus der EP 0 824 999 A2 ist beispielsweise eine Astschere mit einer Einfachgetriebeübersetzung dieser Art bekannt. Dabei ist dort eine der beiden Schneiden fest mit einem Handhebel verbunden und die andere Schneide ist mit dem anderen Handhebel über ein zusätzliches Gelenk verbunden.

Aus der EP 1 153 713 A1 ist eine Heckenschere bekannt, die mit einem Zweifachgetriebe versehen ist. Zwischen dem Griff des Handhebels und der zugeordneten Schneide besteht keine starre Verbindung mehr.

Der vorliegenden Erfindung liegt die Aufgabe zugrunde, solche handbetätigten Schneidwerkzeuge mit einem Getriebe so weiterzubilden, dass sie flexibler sind und erweitert einsetzbar sind.

Die Erfindung sieht zur Lösung dieser Aufgabe bei einem handbetätigten Schneidwerkzeug der eingangs genannten Art vor, dass die Zahnsegmente durch einen Arretiermechanismus wahlweise in einen schneidkraftübertragenden gegenseitigen Eingriff bringbar sind oder frei von einem solchen bleiben.

Durch diese Ausgestaltung wird es nun möglich, die Getriebeübersetzung wahlweise zu benutzen oder abzuschalten. Dies gilt für Werkzeuge mit einem Einfachgetriebe oder auch mit einem Zweifachgetriebe, wobei hier dann auch die Möglichkeit besteht, nur eine Hebelübersetzung abzuschalten und eine zugeschaltet zu lassen.

Dabei wird bei einem schneidkraftübertragendem Eingriff der Zahnsegmente stets ein Griffteil eines Hebels relativ zu einem ihm zugeordneten Schneidenteil verschwenkt, während der Griffteil bei abgeschaltetem Getriebe starr an die Drehbewegung seines Schneidenteiles um die Hebel-Schwenkachse gekoppelt ist.

Eine erste Ausführungsform sieht vor, dass mindestens eines der Zahnsegmente schwenkbar an seinem Hebel gelagert und durch den Arretiermechanismus mit diesem fest koppelbar oder freigegeben ist. Dabei kann in Ausgestaltung der Erfindung der Arretiermechanismus so ausgestaltet sein, dass bei fest mit dem Hebelarm gekoppeltem Zahnsegment die dem Hebelarm zugeordnete Schneidklinge oder dergleichen gegenüber dem Hebelarm frei schwenkbar ist.

In weiterer Ausgestaltung der Erfindung kann mit dem Hebelarm fest eine Gelenkplatte verbunden sein, an der auf gegenüberliegenden Seiten eine das Zahnsegment tragende Segmentplatte und eine mit der Schneidklinge fest verbundene Schneidenplatte gelagert sind. Die Segmentplatte und die Schneidenplatte sind dabei vorteilhaft an einer gemeinsamen Schwenkachse gelagert, so dass dann in Ausgestaltung der Erfindung der Arretiermechanismus in einfacher Weise als ein parallel zu der Schwenkachse verschiebbarer Bolzen ausgebildet sein kann, der mit einem in seiner Längsrichtung verlaufenden Vorsprung in eine Arretiernut der Segmentplatte oder in eine Arretiernut der Schneidenplatte eingreift. Je nach Stellung des beispielsweise durch Daumendruck verstellbaren Bolzens ist daher bei abgeschaltetem Getriebe die Segmentplatte frei beweglich, während die Schneidenplatte fest mit dem Hebelarm gekoppelt ist. Bei eingeschaltetem Getriebe dagegen ist die Segmentplatte fest mit dem Hebelarm, die Schneidenplatte dagegen gegenüber dieser um die Schwenkachse verschwenkbar.

In vorteilhafter Weiterbildung der Erfindung kann beiden Hebelarmen eine Getriebeanordnung mit je einer Segmentplatte, einer Schneidenplatte und einem Arretiermechanismus zugeordnet sein, so dass wahlweise ein Zweifachgetriebe, ein Einfachgetriebe oder ein starrer Antrieb der Schneidelemente über die Hebelarme erreichbar ist.

Bei einer alternativen Ausführungsform wird als Arretiermechanismus ein Hebelgetriebe mit zwei Endstellungen vorgesehen, mit dem eines der Zahnsegmente aus einer ersten Position, in der es mit dem anderen Zahnsegment in Eingriff steht, in eine zweite Position bewegbar und dort arretierbar ist, in der es im Abstand zum ersten Zahnsegment steht.

Auch bei einer solchen Bauart lässt sich zur Kraftübertragung das Getriebe einschalten oder abschalten.

In Ausgestaltung dieser alternativen Bauart kann ein Zahnsegment fest am Hebelarm angeordnet sein und die Lagerung für das zweite Zahnsegment bilden, das über einen verschiebbaren Stellbolzen und einen in einer Kulisse geführten Führungsstift gelenkig am ersten Zahnsegment verstellbar gehalten ist. Dabei kann das erste Zahnsegment als eine Gelenkplatte mit einem Langloch zum Verstellen des Stellbolzens ausgebildet sein und es kann die Gelenkplatte mit einem Führungsstift versehen werden, der in der Kulisse des ebenfalls als Platte ausgebildeten zweiten Zahnsegmentes geführt ist. Bei einer vorteilhaften Ausführungsform kann dabei das Langloch in der ersten Gelenkplatte mit einer Verengung zur Arretierung des Stellbolzens am einen oder anderen Ende des Langloches versehen werden, so dass hier durch Verschieben des Stellbolzens im Langloch die Getriebeanordnung zuschaltbar oder abschaltbar wird.

Die Erfindung ist in der Zeichnung anhand von Ausführungsbeispielen dargestellt und wird im folgenden erläutert. Es zeigen:
- Fig. 1: die Ansicht einer erfindungsgemäß ausgestalteten Heckenschere in der Stellung mit geschlossenen Schneidklingen und eingeschaltetem Getriebe,
- Fig. 2: die vergrößerte Darstellung des Schnittes durch die Fig. 1 längs der Linie II-II, jedoch in ausgeschaltetem Zustand des Getriebes,
- Fig. 3: die Schere der Fig. 1 im weit geöffneten Zustand mit eingeschaltetem Getriebe,
- Fig. 4: die Schere der Fig. 1 im geöffneten Zustand aber mit ausgeschaltetem Kraftübertragungsgetriebe,
- Fig. 5: eine Heckenschere ähnlich Fig. 1, jedoch mit einer Zweifachgetriebeanordnung,
- Fig. 6: die Heckenschere der Fig. 5 in geöffnetem Zustand und mit einem der beiden Getriebe eingeschaltet, während das zweite Getriebe abgeschaltet ist,
- Fig. 7: die Heckenschere der Fig. 5 im geöffneten Zustand, jedoch mit dem Getriebe eingeschaltet, das in Fig. 6 abgeschaltet war, wogegen das in Fig. 6 eingeschaltete Getriebe abgeschaltet ist,
- Fig. 8: die Heckenschere der Fig. 5 in geöffneten Zustand und mit beiden Getrieben eingeschaltet,
- Fig. 9: eine Alternativausführung der Erfindung für eine Astschere mit abgeschaltetem Getriebe in einer Teilseitenansicht von einer Seite,
- Fig. 10: die Teilseitenansicht der Astschere der Fig. 9 von der anderen Seite her gesehen,
- Fig. 11: die Darstellung der Astschere der Fig. 10 in der gleichen Seitenansicht wie dort, jedoch mit eingeschaltetem Getriebe und
- Fig. 12: die Astschere der Fig. 11 von der anderen Seite her - wie in Fig. 9 - gesehen.

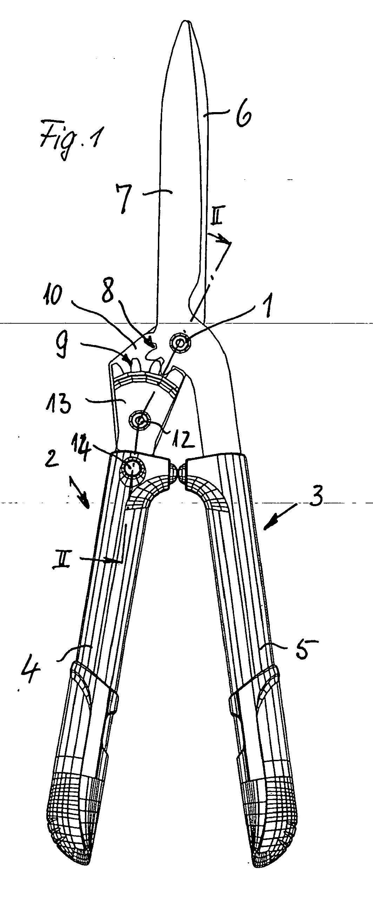

Die Fig. 1 zeigt eine handbetätigte Heckenschere, die aus zwei um die Achse 1 schwenkbar aneinander gelagerten Hebeln 2 und 3 besteht, wobei jeder der Hebel aus einem Griff 4 bzw. 5 als Hebelarme und aus einem Schneidenteil 6 bzw. 7 besteht. Das Schneidenteil 7 ist dabei beim Ausführungsbeispiel fest mit dem Griff 5 verbunden und bildet mit diesem den Hebel 3. Das Schneidenteil 6 ist, wie noch erläutert werden wird, lösbar mit dem Griff 4 verbunden.

Das Schneidenteil 7 weist ein fest an ihm ausgebildetes Zahnsegment 8 auf, dessen Drehpunkt mit der Schwenkachse 1 zusammenfällt. An dem zum Griff 4 weisenden Teil des Schneidenteiles 6, der also in Fig. 1 unterhalb der Schwenkachse 1 liegt, ist eine Schneidenplatte 10 vorgesehen, die einteilig mit dem Schneidenteil 6 ist. Die Schneidenplatte 10 ist über einen Bolzen 12 schwenkbar an einer Gelenkplatte 11 gelagert, die ihrerseits fest mit dem Griff 4 verbunden ist. Über den Bolzen 12 ist auch ein Zahnsegment 13 schwenkbar an der Gelenkplatte 11 gelagert, dessen Zähne 9 mit den Zähnen 8 des Schneidenteiles 7 in Eingriff stehen. Das Zahnsegment 13 ist dabei um die vom Bolzen 12 gebildete Schwenkachse schwenkbar.

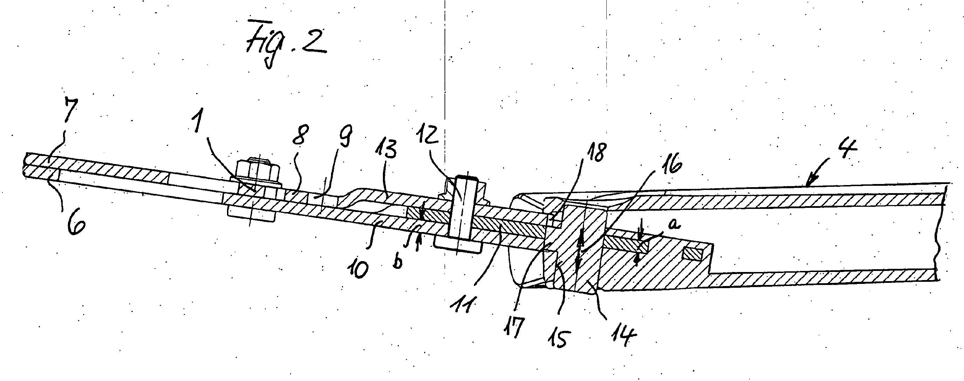

Wie Fig. 2 zeigt, ist dem Griff 4 ein Schaltbolzen 14 zugeordnet, der in einer entsprechenden Führung 15 des Griffes 4 im Sinne der Pfeile 16 längs seiner Achse verschiebbar ist und jeweils in zwei Endstellungen arretierbar ist. Der Bolzen 14 ist auf der zu den Schneidenteilen hin weisenden Seite mit einem Vorsprung 17 versehen, dessen in Richtung der Achse des Bolzens 14 gemessene Breite der Dicke a und b der Gelenkplatte 11 und der Schneidenplatte 10 entspricht, die beide auf der zum Bolzen 14 gerichteten Seite, ebenso wie die Segmentplatte 13 eine Nut 18 aufweisen, in die der Vorsprung 17 des Bolzens 14 je nach seiner Lage eingreifen kann.

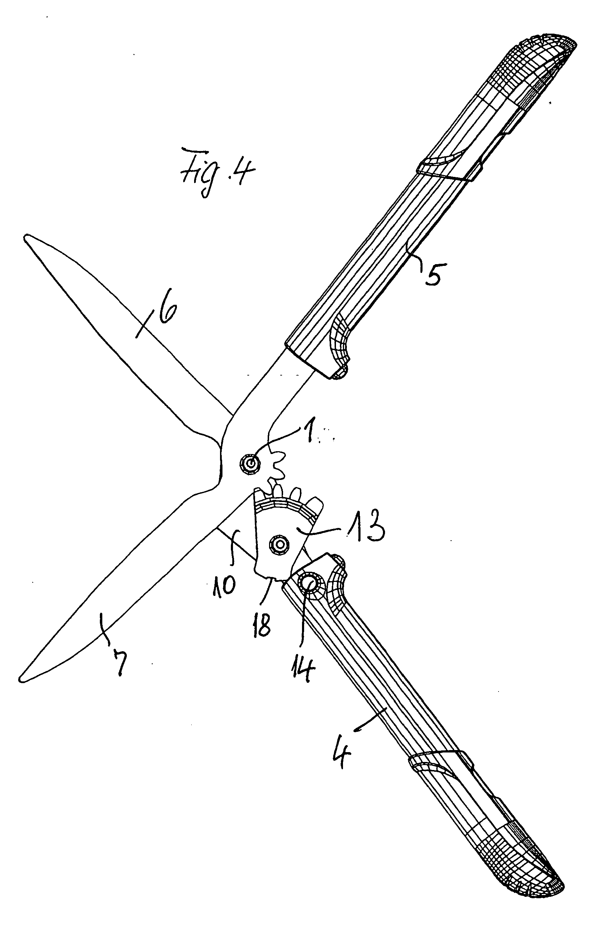

Beim dargestellten Ausführungsbeispiel und in der Position nach Fig. 2 ist daher die Schneidenplatte 10 fest mit dem Griff 4 verbunden, während die Segmentplatte 13 frei schwenkbar um den Bolzen 12 ist. Dies entspricht daher der Darstellung nach Fig. 4.

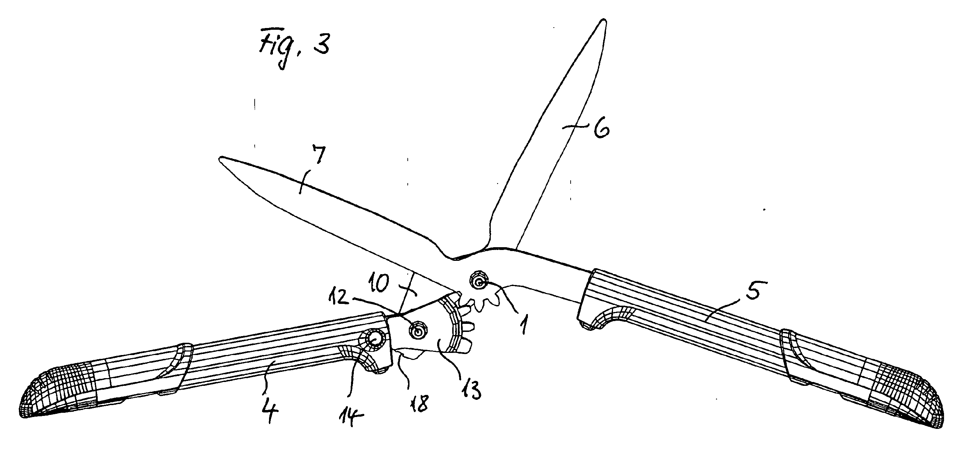

Wird der Bolzen 14 aus der Lage der Fig. 2 nach oben verschoben, dann erfasst sein Vorsprung 17 die Nut 18 der Segmentplatte 13 und die entsprechende Nut der Gelenkplatte 11. In diesem Zustand ist dann die Schneidenplatte 10 frei vom Griff 4, wie das der Stellung der Heckenschere nach Fig. 3 entspricht. Es wird aus Fig. 2 im übrigen deutlich, dass die Stärke der Segmentplatte 13 der Stärke b der Schneidenplatte 10 entspricht, um den alternativen Eingriff des Vorsprunges 17 jeweils in die Nuten 18 der Gelenkplatte 11 und der Schneidenplatte 10 einerseits oder der Gelenkplatte 11 und dem Zahnsegment 13 andererseits zu gewährleisten.

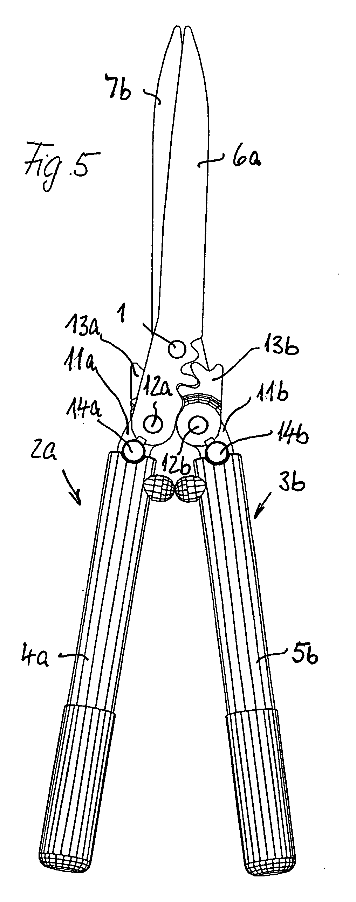

In den Fig. 5 bis 8 ist eine Heckenschere gezeigt, die im Gegensatz zu der Heckenschere der Fig. 1 bis 4 mit je einem Kraftübertragungsgetriebe für jeden der beiden für die Betätigung vorgesehenen Hebelarme versehen ist. Der grundsätzliche Aufbau dieser beiden Getriebe entspricht jedoch jenem Getriebeaufbau, der für die Heckenschere der Fig. 1 bis 4 bereits erläutert wurde. Die Fig. 5 bis 8 erhalten daher für die Teile, die in ihrer Funktion jenen der Heckenschere der Fig. 1 bis 4 entsprechen, die gleichen Bezugsziffern, die jedoch, da es sich um unterschiedliche Ausgestaltungen handelt, jeweils zusätzlich mit den Buchstaben a bzw. b, je nachdem, ob das entsprechende Teil dem einen oder anderen Hebelarm zugeordnet ist, versehen sind.

Die Fig. 5 lässt daher erkennen, dass die Heckenschere mit einem Hebelarm 2a und einem Hebelarm 3b versehen ist, wobei dem Hebelarm 2a ein Griffteil 4a und ein Schneidenteil 6a zugeordnet sind, dem Hebelarm 3b dagegen ein Griffteil 5b und ein Schneidenteil 7b. Beide Hebelarme bzw. deren Schneidenteile 6a und 7b sind über eine Schwenkachse 1 miteinander verbunden und die Schneidenteile 6a und 7b sind zum einen jeweils mit einer Verzahnung 8a - die Verzahnung 8b des Schneidenteiles 7b ist in Fig. 5 nicht sichtbar - versehen, zum anderen sind beide Schneidenteile mit Gelenkplatten 10a, 10b ausgerüstet, die, wie beim Ausführungsbeispiel der Fig. 1 bis 4, jeweils über einen Betätigungsbolzen 14a bzw. 14b fest mit dem zugeordneten Griffteil 4a bzw. 5b koppelbar sind oder, je nach Stellung des Betätigungsbolzens 14a und 14b, gegenüber dem zugeordneten Griffteil um die Schwenkachse 12a bzw. 12b schwenkbar sind. An jeder Gelenkplatte 10a und 10b ist ein Zahnsegment 13a bzw. 13b über die Schwenkachse 12a, 12b schwenkbar angeordnet und dieses Zahnsegment kann jeweils über den Betätigungsbolzens 14a bzw. 14b anstelle der zugeordneten Gelenkplatte 10a oder 10b fest mit dem Griffteil 4a oder 5b gekoppelt werden. Dies geschieht in gleicher Weise wie bereits anhand der Fig. 1 bis 4, insbesondere Fig. 2 erläutert, durch die Verschiebung des Gelenkbolzens 14 längs seiner Achse, wobei dann ein Arretiervorsprung in entsprechende Nuten 18a, 18b der Segmentplatten 13a, 13b oder der Gelenkplatten 10a, 10b eingreift und die entsprechenden Teile mit dem Griffteil 4a bzw. 5b fest verbindet.

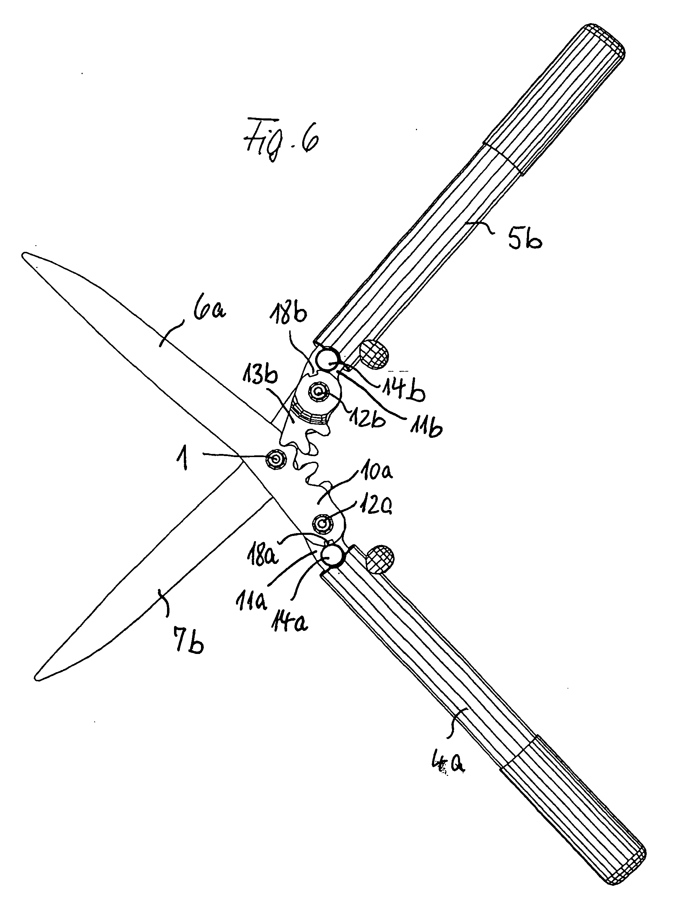

Die Fig. 6 zeigt nun die Heckenschere der Fig. 5 im geöffneten Zustand, d.h. in der Stellung, in der die beiden Griffteile 4a und 5b um die Schwenkachse 1 auseinanderbewegt sind, so dass auch die Schneidenteile 6a und 7b geöffnet sind. Dabei ist die Heckenschere in dem Zustand, in dem beide Schneidenteile 6a und 7b jeweils mit ihren Gelenkplattenteilen 10a und 10b fest mit dem zugeordneten Griffteil 4a und 5b verbunden sind. Die Segmentplatten, von denen die Segmentplatte 13b zu sehen ist, sind frei schwenkbar um die Schwenkachse 12a bzw. 12b und die Eingriffsnut 18b der Segmentplatte 13b ist nicht in Eingriff mit dem entsprechenden Arretiervorsprung des Bolzens 14b, während die Nut 18a der Gelenkplatte des Schneidenteiles 7b und 6a fest mit dem zugeordneten Griffteil 4a bzw. 5b gekoppelt sind. Aus dieser Figur wird auch deutlich, dass hier die Gelenkplatten 11a und 11b, die fest mit den Griffteilen 4a und 5b verbunden sind, etwas weiter aus der Verkleidung der Griffteile 4a und 5b herausragen, und dass der jeweilige Betätigungsbolzen 14a und 14b daher außerhalb dieser Verkleidung liegt. Die Funktionsweise bleibt jedoch die gleiche. Die um das Gelenk 12a bzw. 12b schwenkbaren Segmentplatten 13a, 13b und die um die Schwenkachse 1 schwenkbaren Schneidenplatten 10a, 10b, um welche wiederum die Segmentplatten schwenkbar sind, werden wahlweise je nach Stellung der Betätigungsbolzen 14a und 14b mit dem zugeordneten Hebelarm gekoppelt.

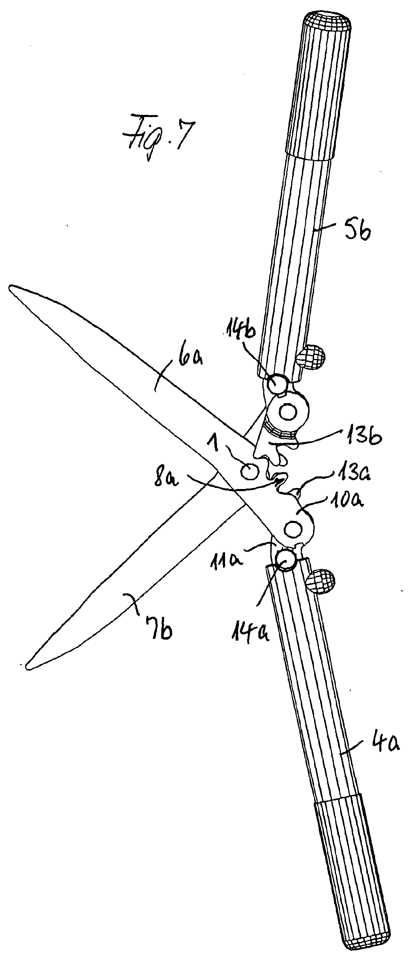

Die Fig. 7 zeigt nun eine Stellung der geöffneten Heckenschere gemäß Fig. 5, bei der die beiden Kraftübertragungsgetriebe der Hebelteile 4a und 5b in Eingriff sind. Das Schneidenteil 6a mit seiner Schneidenplatte 10a ist um das Schwenkgelenk 12a frei schwenkbar, die unterhalb des Schneidenteiles 6a liegende Segmentplatte 13a ist fest mit dem Griffteil 4a gekoppelt und bewirkt die Bewegung des Schneidenteiles 7b über den Zahneingriff.

Gleiches gilt für den Schneidenteil 6a, der ebenfalls über den Zahneingriff der Segmentplatte 13b mit der Verzahnung 8a des Schneidenteiles 6a in Eingriff steht, weil die Segmentplatte 13b fest mit dem Griffteil 5b arretiert ist.

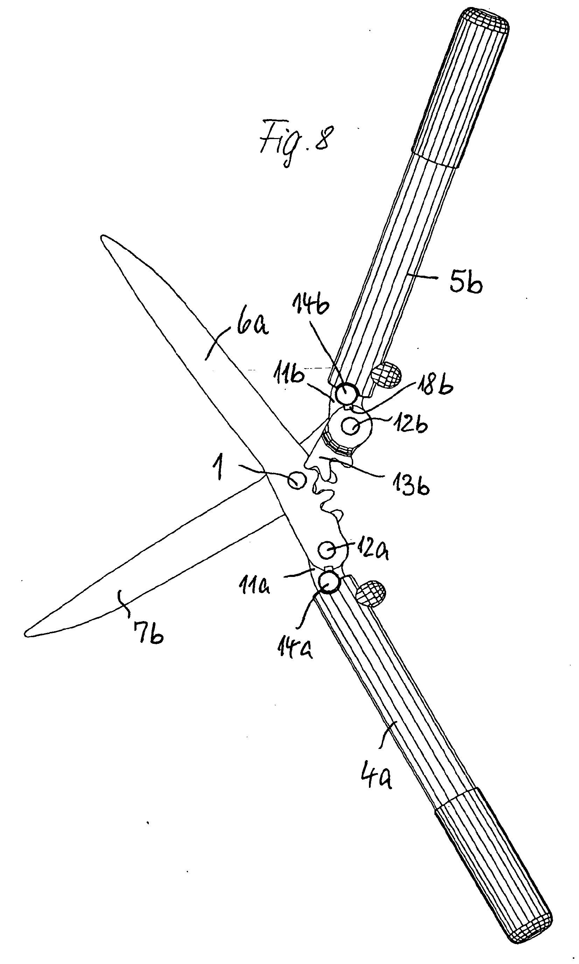

Fig. 8 dagegen zeigt nun eine Stellung der Heckenschere, bei der das Schneidenteil 6a mit dem zugeordneten Griffteil 4a über die Nut 18a und den Bolzen 14a fest arretiert ist. Das Schneidenteil 7b dagegen ist um die Schwenkachse 1 schwenkbar, ist aber nicht fest mit dem zugeordneten Griffteil 5b arretiert, sondern wird über die Segmentplatte 13b mit der Kraft des Griffteiles 5b beaufschlagt, die über ihre Nut 18b über den Betätigungsbolzen 14b mit diesem Hebelteil 5b bzw. dessen Gelenkplatte 11 b fest gekoppelt ist. In der Stellung der Fig. 8 arbeitet die Heckenschere daher nur mit einem Kraftübertragungsgetriebe, während das zweite ausgeschaltet und wirkungslos ist. Die Heckenschere der Fig. 5 bis 8 lässt daher verschiedene Einsatzmöglichkeiten zu, die wahlweise jeweils durch Betätigung der Bolzen 14a bzw. 14b vom Benutzer eingestellt werden können.

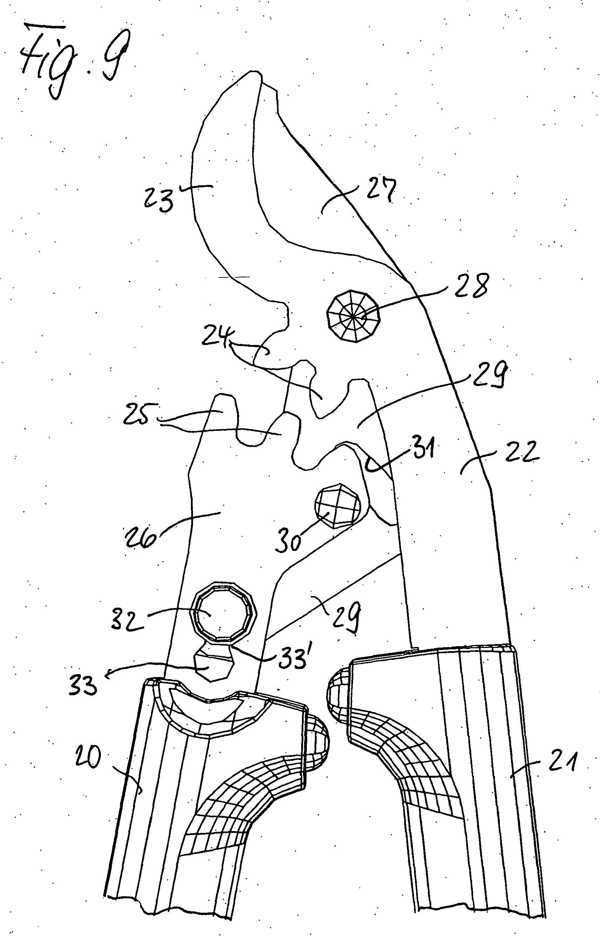

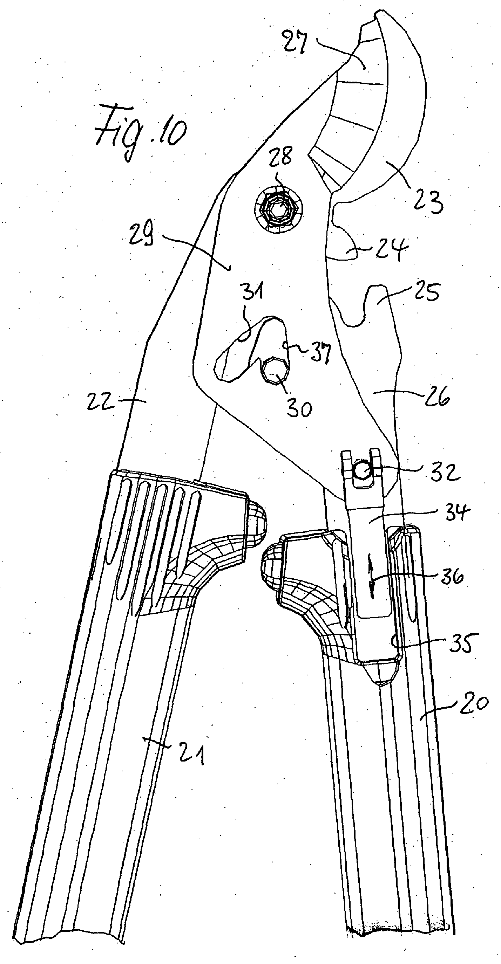

Die Fig. 9 bis 12 zeigen den Schneidmechanismus einer Astschere mit zwei Handgriffen 20 und 21, wobei mit dem Handgriff 21 eine Untermesserplatte fest verbunden ist, die ein Untermesser 23 und Zähne 24 aufweist, die mit einer Gegenverzahnung 25 einer Getriebeplatte 26 in Eingriff gebracht werden können, die fest mit dem Handgriff 20 verbunden ist. Mit dem Untermesser 23 steht ein Obermesser 27 in Wirkverbindung, das schwenkbar um die Achse 28 an dem Untermesser 23 gelagert ist und sich in einer Obermesserplatte 29 über die Schwenkachse 28 hinaus in Richtung des Griffes 20 fortsetzt, die dem Betrachter in Fig. 10 zugewandt ist.

Die Obermesserplatte 29 ist über einen Kulissenstift 30 an der Getriebeplatte 26 angelenkt, der in einer auf dem Kopf stehenden V-förmigen Nut 31 der Obermesserplatte 29 geführt ist. Die Obermesserplatte 29 wird in der in den Fig. 9 und 10 gezeigten Lage über den Kulissenstift 30 und über den Bolzen 32 arretiert, der in einem Langloch 33 mit einer mittigen Verengung 33' geführt ist und der mit einem Führungsbolzen 34 verbunden ist, der in einer Längsführung 35 des Griffes 20 in Richtung der Pfeile 36 hin und her bewegbar ist. Die Verzahnung 24, 25 bleibt, wie zu sehen ist, außer Eingriff, wenn der Stift die in Fig. 9 gezeigte Lage einnimmt, in der dann der Kulissenstift 30 an dem unteren Ende des in Fig. 10 zu erkennenden ersten Schenkels 37 der V-förmigen Führung 31 anschlägt. In dieser Stellung bleiben die Zähne 24 und 25 außer Eingriff. Die Astschere arbeitet ohne eine Getriebeübersetzung.

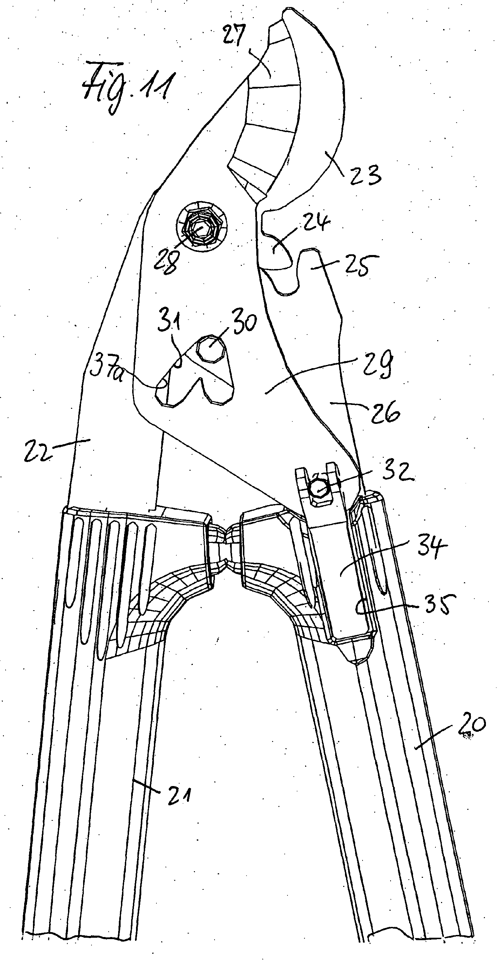

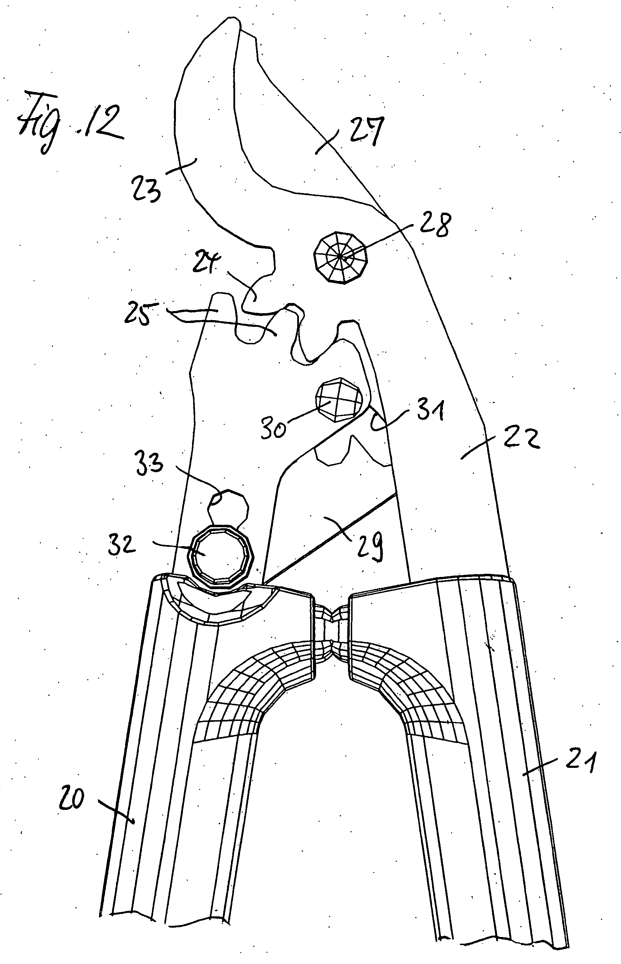

Die Fig. 11 und 12 zeigen die Astschere der Fig. 9 und 10 in der Stellung, in der die Verzahnung 24, 25 zum Eingriff gebracht ist. Wie die Fig. 12 erkennen lässt, ist zu diesem Zweck der Schaltbolzen 32 über die Verengung 33' hinweg in die untere Lage des Langloches 33 gebracht, so dass der Kulissenstift 30, wie insbesondere aus Fig. 11 erkennbar ist, nunmehr am oberen Ende der auf dem Kopf stehenden V-förmigen Nut 31 steht. Er ist dabei in dem zweiten Schenkel 37a der Nut um den Bolzen 32 schwenkbar geführt. Dieser zweite Schenkel kann hierfür als Kreisbogenabschnitt um den Bolzen 32 geformt sein. Die Verzahnungen 24 und 25 kommen damit in Eingriff, so dass, wie im Fall der Astschere der Fig. 1 bis 8, höhere Schneidkräfte ausgeübt werden können.

Das Langloch 33 erlaubt, wie bereits beschrieben, die Arretierung des Schaltbolzens 32 in den beiden Endlagen, was beispielsweise durch eine federnde Anordnung dieses Bolzens im Langloch 33 geschehen kann.

## Patentansprüche

1. Handbetätigtes Schneidwerkzeug, insbesondere Heckenschere oder Astschere, mit zwei schwenkbar aneinander gelagerten Hebeln (2, 3; 20, 21), die jeweils einseitig mit Schneidklingen und/oder Backen versehen sind und zur Kraftverstärkung über eine Getriebeanordnung (8, 9; 24, 25) verbunden sind, die aus mindestens zwei miteinander in Eingriff kommenden Zahnsegmenten besteht, von denen jedes einem der Hebel zugeordnet ist, **dadurch gekennzeichnet, dass** die Zahnsegmente (13, 24, 8, 25) durch einen Arretiermechanismus (18, 32) wahlweise in einen schneidkraftübertragenden gegenseitigen Eingriff bringbar sind oder frei von einem solchen bleiben.

2. Schneidewerkzeug nach Anspruch 1, **dadurch gekennzeichnet, dass** jeder Hebel (2, 3, 20, 21) aus einem Schneidenteil und einem Hebelarm oder Griffteil (4, 5, 20, 21) besteht und dass bei schneidkraftübertragendem Eingriff der Zahnsegmente mindestens ein Hebelarm (4, 20) relativ zu seinem Schneidenteil (6, 27) schwenkbar ist, während er bei getriebefreiem Betrieb starr an die Drehbewegung seines Schneidenteiles um die Hebel-Schwenkachse (1) gekoppelt ist.

3. Schneidwerkzeug nach Anspruch 1, **dadurch gekennzeichnet, dass** mindestens eines der Zahnsegmente (9) schwenkbar an seinem Hebel (2) gelagert und durch den Arretiermechanismus (14) mit diesem fest koppelbar oder freigegeben ist.

4. Schneidwerkzeug nach Anspruch 3, **dadurch gekennzeichnet, dass** der Arretiermechanismus so ausgebildet ist, dass bei fest mit dem Hebelarm (4) gekoppelten Zahnsegment (13) die dem Hebelarm zugeordnete Schneidklinge über eine am Zahnsegment (13) angeordnete Schwenkachse (12) gegenüber dem Hebelarm (4) schwenkbar ist.

5. Schneidwerkzeug nach den Ansprüchen 3 oder 4, **dadurch gekennzeichnet, dass** fest mit dem Hebelarm (4) eine Gelenkplatte (11) verbunden ist, an der auf gegenüberliegenden Seiten eine das Zahnsegment tragende Segmentplatte (13) und eine mit der Schneidklinge (6) fest verbundene Schneidenplatte (10) gelagert sind.

6. Schneidwerkzeug nach Anspruch 5, **dadurch gekennzeichnet, dass** die Segmentplatte (13) und die Schneidenplatte (10) an einer gemeinsamen Schwenkachse (12) gelagert sind.

7. Schneidwerkzeug nach Anspruch 6, **dadurch gekennzeichnet, dass** der Arretiermechanismus ein parallel zu der Schwenkachse (12) verschiebbarer Bolzen (14) ist, der mit einem in seiner Längsrichtung verlaufenden Vorsprung (17) in eine Arretiernut (18) der Segmentplatte (13) oder in eine Arretiernut der Schneidenplatte (10) eingreift.

8. Schneidwerkzeug nach einem der Ansprüche 5 bis 7, **dadurch gekennzeichnet, dass** beiden Hebelarmen (4a, 5b) eine Getriebeanordnung mit je einer Segmentplatte (13a, 13b), einer Schneidenplatte (10a, 10b) und einem Arretiermechanismus (14a, 14b) zugeordnet ist, so dass wahlweise ein Zweifachgetriebe, ein Einfachgetriebe oder ein starrer Antrieb der Schneidelemente über die Hebelarme (4a, 5b) erreichbar ist.

9. Handbetätigtes Schneidwerkzeug nach Anspruch 1, **dadurch gekennzeichnet, dass** als Arretiermechanismus ein Hebelgetriebe (26, 29) mit zwei Endstellungen vorgesehen ist, mit dem eines der Zahnsegmente (24) aus einer ersten Position, in der es mit dem anderen Zahnsegment (25) in Eingriff steht, in eine zweite Position bewegbar und dort arretierbar ist, in der es im Abstand zum ersten Zahnsegment steht.

10. Schneidwerkzeug nach Anspruch 9, **dadurch gekennzeichnet, dass** ein Zahnsegment (25) fest am zugeordneten Hebelarm (20) angeordnet ist und die Lagerung für ein zweites Zahnsegment (24) bildet, das über einen verschiebbaren Stellbolzen (32) und einen in einer Kulisse geführten Führungsstift (30) gelenkig am ersten Zahnsegment (25) verstellbar gehalten ist.

11. Schneictwerkzeug nach Anspruch 10, **dadurch gekennzeichnet, dass** das erste Zahnsegment (25) als eine Gelenkplatte (26) mit einem Langloch (33) zum Verstellen des Stellbolzens (32) ausgebildet ist.

12. Schneidwerkzeug nach Anspruch 11, **dadurch gekennzeichnet, dass** die Gelenkplatte (26) mit einem Führungsstift (30) versehen ist, der in der Kulisse (31) einer der Messerplatten (Obermesserplatte 29) geführt ist.

13. Schneidwerkzeug nach Anspruch 9, **dadurch gekennzeichnet, dass** eine der Messerplatten (Obermesserplatte 29) längs der Achse des zugeordneten Hebelarmes (20) verschiebbar geführt ist.

14. Schneidwerkzeug nach Anspruch 11, **dadurch gekennzeichnet, dass** das Langloch (33) mit einer Verengung (33') zur Arretierung des Stellbolzens in zwei Endlagen versehen ist.

## Claims

1. Manual cutting tool, particularly a hedge trimmer or pruning shears, having two levers (2, 3; 20, 21) which are pivotably mounted on each other, which are each provided with cutting blades and/or jaws on one side and are connected via a transmission arrangement (8, 9; 24, 25) for greater force, which transmission arrangement consists of at least two toothed segments which engage with each other, each of which is associated to one of the levers, **characterised in that** the toothed segments (13, 24, 8, 25) may optionally be mutually engaged by a locking mechanism (18, 32) such that cutting force is transmitted or may remain free from an engagement of this kind.

2. Cutting tool according to claim 1, **characterised in that** each lever (2, 30, 20, 21) consists of a cutting part and a lever arm or a handle part (4, 5, 20, 21) and **in that** when the toothed segments are engaged such that cutting force is transmitted at least one lever arm (4; 20) may be pivoted relative to its cutting part (6, 27), whereas the lever arm is rigidly coupled to the rotational movement of its cutting part about the lever pivot axis (1) when operating without transmission.

3. Cutting tool according to claim 1, **characterised in that** at least one of the toothed segments (9) is pivotably mounted on its lever (2) and can be securely coupled to the lever or released by the locking mechanism (14).

4. Cutting tool according to claim 3, **characterised in that** the locking mechanism is constructed in such a way that when the toothed segment (13) is securely coupled to the lever arm (4) the cutting blade associated with the lever arm is able to pivot relative to the lever arm (4) via a pivot axis (12) arranged on the toothed segment (13).

5. Cutting tool according to either claim 3 or claim 4, **characterised in that** an articulated plate (11) is securely connected to the lever arm (4), on which plate are mounted on opposite sides a segment plate (13) supporting the toothed segment and a cutting plate (10) securely connected to the cutting blade (6).

6. Cutting tool according to claim 5, **characterised in that** the segment plate (13) and the cutting plate (10) are mounted on a common pivot axis (12).

7. Cutting tool according to claim 6, **characterised in that** the locking mechanism is a pin (14) which can move parallel to the pivot axis (12), and engages with a projection (17) extending in its longitudinal direction in a locking groove (18) in the segment plate (13) or in a locking groove in the cutting plate (10).

8. Cutting tool according to any one of claims 5 to 7, **characterised in that** a transmission arrangement having a respective segment plate (13a, 13b), cutting plate (10a, 10b) and locking mechanism (14a, 14b) is associated with both lever arms (4a, 5b), so that optionally double transmission, single transmission or rigid driving of the cutting elements can be achieved via the lever arms (41, 5b).

9. Manual cutting tool according to claim 1, **characterised in that** the locking mechanism provided is a lever transmission means (26, 29) with two end positions, with which one of the toothed elements (24) can be moved from a first position, in which it engages with the other toothed segment (25), into a second position, in which it is at a distance from the first toothed segment, and can be locked.

10. Cutting tool according to claim 9, **characterised in that** a toothed segment (25) is securely arranged on the associated lever arm (20) and forms the bearing for a second toothed segment (24), which is adjustably articulated to the first toothed segment (25) via a movable adjustment pin (32) and a guide pin (30) guided in a connecting member.

11. Cutting tool according to claim 10, **characterised in that** the first toothed segment (25) is constructed as an articulated plate (26) with a slot (33) for moving the adjustment pin (32).

12. Cutting tool according to claim 11, **characterised in that** the articulated plate (26) is provided with a guide pin (30), which is guided in the connecting member (31) of one of the cutter plates (upper cutter plate 29).

13. Cutting tool according to claim 9, **characterised in that** one of the cutter plates (upper cutter plate 29) is guided so that it can move along the axis of the associated lever arm (20).

14. Cutting tool according to claim 11, **characterised in that** the slot (33) is provided with a taper (33') for locking the adjustment pin in two end positions.

## Revendications

1. Outil de coupe actionné manuellement, en particulier cisaille pour haies ou cisaille pour branches, comprenant deux leviers (2, 3 ; 20, 21) fixés l'un sur l'autre de façon à pouvoir pivoter, qui sont dotés chacun sur un côté de lames de coupe et/ou de mâchoires et sont reliés pour l'amplification de la force par un dispositif d'engrenage (8, 9 ; 24, 25), lequel comprend au moins deux segments dentés venant en prise l'un avec l'autre, dont chacun est attribué à l'un des leviers, **caractérisé en ce que** les segments dentés (13, 24 ; 8, 25) peuvent être amenés par un mécanisme d'arrêt (18, 32) au choix dans un engrènement réciproque transmis par la force de coupe ou restent exempts d'un tel engrènement.

2. Outil de coupe selon la revendication 1, **caractérisé en ce que** chaque levier (2, 3, 20, 21) est constitué d'une partie de lame et d'un bras de levier ou d'une partie de poignée (4, 5, 20, 21) et **en ce que**, en cas d'engrènement transmettant la force de coupe des segments dentés, au moins un bras de levier (4, 20) peut basculer par rapport à sa partie de lame (6, 27), tandis que, en cas de service sans engrenage, il est couplé de façon rigide au mouvement de rotation de sa partie de lame autour de l'axe de pivotement de levier (1).

3. Outil de coupe selon la revendication 1, **caractérisé en ce qu'**au moins l'un des segments dentés (9) est logé de façon à pouvoir basculer sur un levier (2) et peut être couplé de façon fixe par le mécanisme d'arrêt (14) avec celui-ci ou est libéré.

4. Outil de coupe selon la revendication 3, **caractérisé en ce que** le mécanisme d'arrêt est conçu de telle sorte que, dans le cas du segment denté (13) couplé de façon fixe au bras de levier (4), la lame de coupe attribuée au bras de levier peut basculer au moyen d'un axe de pivotement (12) disposé sur le segment denté (13) par rapport au bras de levier (4).

5. Outil de coupe selon les revendications 3 ou 4, **caractérisé en ce que** la plaque articulée (11) est reliée de façon fixe au bras de levier (4), plaque sur laquelle, sur des côtés opposés, sont logées une plaque à segment (13) portant le segment denté et une plaque à lame (10) reliée de façon fixe à la lame de coupe (6).

6. Outil de coupe selon la revendication 5, **caractérisé en ce que** la plaque à segment (13) et la plaque à lame (10) sont logées sur un axe de pivotement (12) commun.

7. Outil de coupe selon la revendication 6, **caractérisé en ce que** le mécanisme d'arrêt est un boulon (14) pouvant coulisser parallèlement à l'axe de pivotement (12), qui s'engage avec une saillie (17) agencée dans son sens longitudinal dans une rainure d'arrêt (18) de la plaque à segment (13) ou dans une rainure d'arête de la plaque à lame (10).

8. Outil de coupe selon l'une quelconque des revendications 5 à 7, **caractérisé en ce qu'**à chacun des deux bras de levier (4a, 5b) est attribué un dispositif d'engrenage comprenant respectivement une plaque à segment (13a, 13b), une plaque à lame (10a, 10b) et un mécanisme d'arrêt (14a, 14b), de sorte qu'au choix un engrenage double, un engrenage simple ou un entraînement rigide des éléments de coupe peut être obtenu au moyen des bras de levier (4a, 5b).

9. Outil de coupe actionné manuellement selon la revendication 1, **caractérisé en ce que**, comme mécanisme d'arrêt, il est prévu un engrenage à levier (26, 29) avec deux positions extrêmes, avec lequel l'un des segments dentés (24) peut être déplacé à partir d'une première position, dans laquelle il est en prise avec l'autre segment denté (25), dans une seconde position et peut y être verrouillé, position dans laquelle il est à distance du premier segment denté.

10. Outil de coupe selon la revendication 9, **caractérisé en ce qu'**un segment denté (25) est disposé de façon fixe sur le bras de levier (20) attribué et forme le logement pour un second segment denté (24), qui est maintenu de façon réglable sur le premier segment denté (25) de manière articulée au moyen d'un boulon de positionnement (32) coulissant et d'une broche de guidage (30) guidée dans une coulisse.

11. Outil de coupe selon la revendication 10, **caractérisé en ce que** le premier segment denté (25) est conçu comme une plaque d'articulation (26) avec un trou oblong (33) pour le réglage du boulon de positionnement (32).

12. Outil de coupe selon la revendication 11, **caractérisé en ce que** la plaque d'articulation (26) est dotée d'une broche de guidage (30), qui est guidée dans la coulisse (31) de l'une des plaques de couteau (plaque de couteau supérieure 29).

13. Outil de coupe selon la revendication 9, **caractérisé en ce que** l'une des plaques de couteau (plaque de couteau supérieure 29) est guidée de façon coulissante le long de l'axe du bras de levier (20) attribué.

14. Outil de coupe selon la revendication 11, **caractérisé en ce que** le trou oblong (33) est doté d'un rétrécissement (33') pour l'arrêt du boulon de positionnement dans deux positions extrêmes.
